# EUROPEAN PATENT APPLICATION

(11) **EP 4 797 349 A1**
(43) Date of publication of application: **26.08.2026**
(21) Application number: 24890476.5
(22) Date of filing: 28.10.2024
(51) Int. Cl.: H01M 4/36, H01M 4/04, H01M 4/133

(54) **NEGATIVE ELECTRODE SHEET, BATTERY, BATTERY PACK, AND ELECTRIC DEVICE**

(30) Priority: 13.11.2023 CN 202311506582
(71) Applicant: BatteroTech Co., Ltd, Jiaxing, Zhejiang 314100 (CN)
(72) Inventor: LIU, Jian, Jiaxing, Zhejiang 314100 (CN); HUANG, Haining, Jiaxing, Zhejiang 314100 (CN)
(74) Representative: Hindles Limited
(86) International application number: PCT/CN2024/127803
(87) International publication number: WO 2025/103119

(57) **Abstract**

Provided is a negative electrode sheet (100), a battery (300), a battery pack, and an electrical device, and relates to the technical field of secondary batteries. The negative electrode sheet (100) comprises a current collector (110), a tab (130) connected to one side of the current collector (110), a first active material layer (150), and a second active material layer (170). The first active material layer (150) is coated on front and back sides of the current collector (110), and a thickness (150) of the first active material layer (150) gradually increases from a side of the tab (130) to a side away from the tab (130), and then gradually decreases. The second active material layer (170) is coated on an outer side of the first active material layer (150), and a thickness of the second active material layer (170) gradually decreases from one side of the tab (130) to the side away from the tab (130), and then gradually increases. The negative electrode sheet (100) provided herein can alleviate the problem of lithium plating, and can improve the safety of the battery (300).

## Description

### Cross-Reference to Related Application

The present invention claims the priority of a Chinese patent application filed with the Chinese Patent Office on November 13, 2023, with an application number of 202311506582.6 and entitled "Negative Electrode Sheet, Battery and Battery Pack", the contents of which are incorporated herein by reference in its entirety.

### Technical Field

The present invention relates to the field of secondary batteries, in particular to a negative electrode sheet, a battery, a battery pack and an electrical device.

### Background

Secondary batteries, also known as rechargeable batteries or storage batteries, are batteries that can be reused by activating their active materials through charging after discharge. A new battery can be constructed by utilizing the reversibility of chemical reactions, that is, after a chemical reaction converts chemical energy into electrical energy, the chemical system can also be restored using electrical energy electrical energy, and then the chemical reaction can be used to convert chemical energy into electrical energy again. Secondary batteries are widely used in new energy vehicles and energy storage devices.

With the development of fast charging technology, when lithium batteries in related technologies are charged at a high rate, lithium metal deposition tends to occur on the negative electrode sheet in regions corresponding to the positive and negative tab. This lithium metal deposition can further form lithium dendrites, and further increase the risk of thermal runaway of the battery.

### Summary

Objectives of the present invention include, for example, providing a negative electrode sheet, a battery, a battery pack, and an electrical device, which can alleviate the problem of lithium plating on the negative electrode sheet.

Embodiments of the present invention may be implemented as follows:
In a first aspect, the present invention provides a negative electrode sheet, including:
a current collector;
a tab connected to one side of the current collector;
a first active material layer, wherein the first active material layer is coated on front and back sides of the current collector, and a thickness of the first active material layer gradually increases from a side of the tab towards a side away from the tab, and then gradually decreases; and
a second active material layer, wherein the second active material layer is coated on an outer side of the first active material layer, and a thickness of the second active material layer gradually decreases from one side of the tab towards the side away from the tab, and then gradually increases.

In an optional embodiment, the first active material layer is a high specific energy active material layer, and a kinetic performance of the second active material layer is greater than that of the first active material layer.

In an optional embodiment, a sum of the thickness of the first active material layer and the thickness of the second active material layer at any location on the current collector is equal.

In an optional embodiment, a ratio of the thickness of the first active material layer to the thickness of the second active material layer is denoted as X, and a value range of X is 0<X≤10.

In an optional embodiment, the ratio of the thickness of the first active material layer to the thickness of the second active material layer gradually increases from one side of the tab towards the side away from the tab, and then gradually decreases.

In an optional embodiment, a surface density of the first active material layer is different from that of the second active material layer.

In an optional embodiment, the first active material layer and the second active material layer are asymmetric structures in an extension direction of the tab.

In an optional embodiment, a particle size distribution of the first active material layer is broader than that of the second active material layer.

In an optional embodiment, a main material of the first active material layer is a mixture of small graphite particles;
a main material of the second active material layer is a mixture of large and small graphite particles.

In an optional embodiment, the current collector and the tab are integrally formed.

In an optional embodiment, the negative electrode sheet is symmetrically arranged with respect to the current collector in a thickness direction of the negative electrode sheet.

In an optional embodiment, the current collector is made of one of metal foil, composite foil and coated foil.

In a second aspect, the present invention provides a battery, including a housing, a bare cell and a terminal, wherein the bare cell includes a positive electrode sheet, a separator and the negative electrode sheet as described in any one of the aforementioned embodiments;
the positive electrode sheet, the separator, the negative electrode sheet and the separator are stacked in sequence;
the bare cell is installed in the housing, and the tab is electrically connected to the terminal.

In a third aspect, the present invention provides a battery pack, including a plurality of batteries described in the aforementioned embodiments, wherein the plurality of batteries are connected in parallel or in series.

In a fourth aspect, the present invention provides an electrical device, including an electrical device body and the battery described in the aforementioned embodiment, wherein the battery is arranged in the electrical device body to supply power to the electrical device body.

The beneficial effects of the negative electrode sheet, battery, battery pack, and electrical device provided by the embodiments of the present invention include, for example:
In the present application, the first active material layer is coated on front and back sides of the current collector, and the thickness of the first active material layer gradually increases from a side of the tab towards a side away from the tab, and then gradually decreases. The second active material layer is coated on an outer side of the first active material layer, and the thickness of the second active material layer gradually decreases from one side of the tab towards the side away from the tab, and then gradually increases. In this way, in a laminated battery, the high-potential region between the positive electrode sheet and the negative electrode sheet can increase the ion diffusion rate, reduce ion transfer impedance, and lower the risk of lithium plating.

### Brief Description of the Drawings

In order to more clearly illustrate the technical solutions of the embodiments of the present invention, the accompanying drawings required for describing the embodiments will be briefly introduced below. It should be understood that the following drawings merely illustrate some embodiments of the present invention and therefore should not be considered as limiting the scope. For those skilled in the art, other relevant drawings can also be obtained based on these drawings without any creative effort.
Fig. 1 is a structural schematic diagram of a battery provided in an embodiment of the present invention;
Fig. 2 is a structural schematic diagram of a negative electrode sheet provided in an embodiment of the present invention;
Fig. 3 is a graph showing the local voltage of a positive electrode sheet and the local voltage of a negative electrode sheet when a battery is charged;
Fig. 4 shows effective voltage distribution between a positive electrode sheet and a negative electrode sheet when a battery is charged.

Reference numerals in the figures: 100, negative electrode sheet; 110, current collector; 130, tab; 150, first active material layer; 170, second active material layer; 300, battery; 310, housing; 330, terminal.

### Detailed Description of the Embodiments

In order to make the objectives, technical solutions and advantages of the embodiments of the present invention clearer, the technical solutions in the embodiments of the present invention will be clearly and completely described below in conjunction with the drawings in the embodiments of the present invention. Obviously, the described embodiments are merely a part but not all of the embodiments of the present invention. The components of the embodiments of the present invention described and shown in the drawings herein can be arranged and designed in various different configurations.

Therefore, the following detailed description of the embodiments of the present invention provided in the accompanying drawings is not intended to limit the scope of the present invention claimed for protection, but merely represents selected embodiments of the present invention. Based on the embodiments in the present invention, all other embodiments obtained by those skilled in the art without any creative effort shall fall within the protection scope of the present invention.

It should be noted that similar reference numerals and letters denote similar items in the following drawings, and therefore, once an item is defined in one drawing, further definition and explanation thereof is not required in subsequent drawings.

In the description of the present invention, it should be noted that if the orientation or position relationship indicated by the terms "upper", "lower", "inside", "outside" and the like is the orientation or position relationship based on the orientation or position relationship shown in the drawings, or is the orientation or position relationship in which the product of the present invention is usually placed when used. It is only for the convenience of describing the present invention and simplifying the description, rather than indicating or implying that the device or element referred to must have a specific orientation, be constructed and operated in a specific orientation, and therefore cannot be understood as a limitation on the present invention.

In addition, such terms as "first", "second", if used, are merely used to distinguish between the descriptions and should not be understood as indicating or implying relative importance.

It should be noted that, in the absence of conflict, the features in the embodiments of the present invention may be combined with each other.

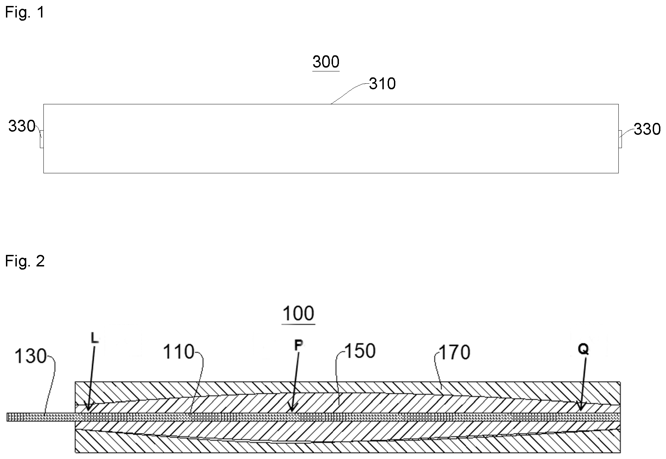

Referring to Fig. 1, this embodiment provides a battery pack. The battery pack can be used as a power part of a new energy vehicle. It can also be used in energy storage equipment for electrical energy storage, and can be applied in electric tools to supply power.

Generally, a battery pack includes a case, a plurality of groups of batteries 300, and a battery management assembly. The plurality of groups of batteries 300 are generally connected in series and parallel to form one or more battery modules. The battery modules are installed in the case. The battery management assembly is electrically connected to the battery to monitor the voltage, temperature and other parameters of each battery 300.

In this embodiment, the battery 300 includes a housing 310, a bare cell and a terminal 330. The bare cell includes a positive electrode sheet, a separator and a negative electrode sheet 100. The positive electrode sheet, the separator, the negative electrode sheet 100 and the separator are stacked in sequence. The bare cell is installed in the housing 310. The positive tab of the positive electrode sheet and the tab 130 of the negative electrode sheet are both electrically connected to the terminal 330.

Generally, the terminal 330 includes a positive terminal 330 and a negative terminal 330, and the positive terminal 330 and the negative terminal 330 are oppositely mounted on both sides of the housing 310. The positive tab of the positive electrode sheet is electrically connected to the positive terminal 330. The tab 130 of the negative electrode sheet 100 is connected to the negative terminal 330.

It should be noted that the battery 300 is a battery with tabs extending from opposite sides. For example, the positive tab of the bare cell connected to the positive electrode sheet extends from the left side of the bare cell, while the tab 130 connected to the negative electrode sheet 100 extends from the right side. The manner of extending tabs from both sides can greatly improve the safety of the battery pack 300. On the one hand, the battery cells with tabs extending from both ends can be monitored and controlled separately. If an abnormity occurs, the battery cells can be handled separately in time to reduce the risk of accidents. On the other hand, the battery cells with tabs extending from both ends can extend the length of the battery terminal, increase the contact area between the battery and a connector, and reduce the contact resistance, thereby reducing the possibility of battery heating and fire. The battery 300 can be a pouch battery, a prismatic battery, or a blade battery. Of course, the battery can also be a cylindrical cell. The battery 300 can be prepared by a lamination process, a winding process, or a combination of lamination and winding processes.

The inventors found that during the charging process of the battery 300, lithium ions de-intercalate from the positive electrode sheet, pass through the separator, and intercalate into the active material of the negative electrode sheet 100. Lithium plating on the negative electrode sheet 100 is primarily caused by excessive current, which leads to excessive local polarization and an overly low negative electrode potential. When the negative electrode potential reaches the deposition potential of metallic lithium, metallic lithium is deposited on the surface of the negative electrode sheet. The main reason for the above lithium plating phenomenon is a voltage drop between the positive electrode sheet and the negative electrode sheet 100 of the battery 300, which leads to an uneven distribution of potential across the negative electrode sheet 100. Therefore, under the same charging rate, the potential on the side of the positive tab of the positive electrode sheet corresponding to the negative electrode sheet 100 and on the side of the tab 130 of the negative electrode sheet is relatively larger, thereby resulting in lithium plating.

In order to solve the above problems, this embodiment provides a negative electrode sheet capable of alleviating the problem of lithium plating caused by potential differences.

Referring to Fig. 2, in this embodiment, the negative electrode sheet 100 includes a current collector 110, a tab 130 connected to one side of the current collector 110, a first active material layer 150, and a second active material layer 170. The first active material layer 150 is coated on front and back sides of the current collector 110, and the thickness of the first active material layer gradually increases from a side of the tab 130 towards a side away from the tab 130, and then gradually decreases. The second active material layer 170 is coated on an outer side of the first active material layer 150, and the thickness of the second active material layer 170 gradually decreases from one side of the tab 130 towards the side away from the tab 130, and then gradually increases.

In this embodiment, the first active material layer 150 is coated on front and back sides of the current collector 110, and the thickness of the first active material layer gradually increases from a side of the tab 130 towards a side away from the tab 130, and then gradually decreases. The second active material layer 170 is coated on an outer side of the first active material layer 150, and the thickness of the second active material layer 170 gradually decreases from one side of the tab 130 towards the side away from the tab 130, and then gradually increases. In this way, the high-potential region between the positive electrode sheet and the negative electrode sheet 100 of the battery 300 can increase the ion diffusion rate, reduce ion transfer impedance, and lower the risk of lithium plating.

In this embodiment, the first active material layer 150 is a high specific energy active material layer, and the kinetic performance of the second active material layer 170 is greater than that of the first active material layer 150.

It should be noted that in the lithium-ion battery 300, the negative electrode material is a place where lithium ions are stored and released. Typical negative electrode materials include graphite, silicon-based materials, metal oxides, etc. Graphite is one of the most widely used negative electrode materials.

High specific energy negative electrode active materials refer to negative electrode materials with higher specific capacity (mAh/g) and lower voltage platform (V). Specific capacity refers to the number of lithium ions that can be stored per unit mass of the negative electrode material, while voltage platform refers to the potential variation range of lithium ions during the charge and discharge process.

High specific energy active materials have the advantages of increasing battery energy density, prolong battery usage time, and reducing battery costs.

In this embodiment, the first active material layer 150 is a high specific energy active material layer relative to the second active material layer 170, that is, the specific capacity of the active material in the first active material layer 150 is greater than the specific capacity of the active material in the second active material layer 170.

The kinetic performance of the second active material layer 170 is greater than the kinetic performance of the first active material layer 150, which means that the kinetics of the active material of the second active material layer 170 is superior to the kinetics of the active material of the first active material layer 150. The kinetic performances of the negative electrode material mainly include its charge and discharge rate, cycle stability and activation process. Different microstructures, surface treatments, synthesis methods and the like of the active material layer will result in different kinetic performances of the active material layer.

When the battery 300 is charged, the voltage applied to the positive terminal 330 and the negative terminal 330 refers to the potential difference applied between the two terminals 330 of the positive electrode and the negative electrode of the battery 300, which is Vapp. Without considering the resistance at the connection, this voltage corresponds to the potential difference between the tab of the positive electrode sheet and the tab 130 of the negative electrode sheet. Each negative electrode sheet 100 experiences a voltage drop at the tab 130 and at a position away from the tab 130. Typically, the greater the distance from the tab 130, the larger the voltage drop.

The effective voltage refers to the voltage between the positive electrode sheet and the negative electrode sheet 100 at any specific position of the battery, which is called Ve. In a spatial Cartesian coordinate system, the directions parallel to the electrode sheets are defined as the X-axis and Y-axis, while the direction perpendicular to the electrode sheets is defined as the Z-axis. At the location where the effective voltage is measured, the positive electrode sheet and the negative electrode sheet 100 share the same X and Y coordinates, but possess different Z coordinates.

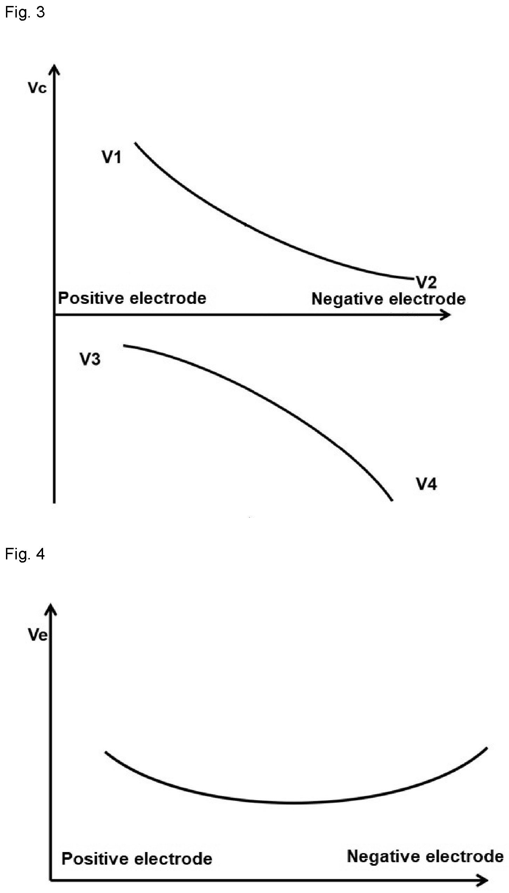

Fig. 3 is a graph showing the local voltage of a positive electrode sheet and the local voltage of a negative electrode sheet 100 during charging. The positive electrode sheet is located above the horizontal axis, while the negative electrode sheet 100 is located below the horizontal axis. The charging method may be one or a combination of charging methods such as constant voltage charging, constant current charging, and pulse charging. Due to the voltage drop caused by current flowing through the current collector 110, the potential V1 at the tab of the positive electrode sheet gradually decreases towards a position corresponding to the tab 130 of the negative electrode sheet 100, and drops to V2 at a position corresponding to the tab 130 of the negative electrode sheet 100, thereby forming the local voltage curve of the positive electrode sheet. Similarly, the potential V4 at the tab 130 of the negative electrode sheet 100 gradually decreases towards a position corresponding to the tab of the positive electrode sheet, and drops to V3 at a position corresponding to the tab of the positive electrode sheet. The voltage applied to the tab of the positive electrode sheet and the tab 130 of the negative electrode sheet 100 is V4-V1, and the local potential difference between the positive electrode sheet and the negative electrode sheet 100 at the same x-coordinate, derived from their local voltage curves, is defined as the effective voltage Ve, as illustrated by the curve in Fig. 3.

As can be seen from Fig. 4, the effective voltage of the positive electrode sheet and the negative electrode sheet 100 is distributed non-uniformly along different positions of the electrode sheet, and the closer to the tab 130, the greater the effective voltage. According to the effective voltage distribution of the positive electrode sheet and the negative electrode sheet 100 in the battery 300. Therefore, the effective voltage is large at the tabs 130 on both sides of the battery (the tab of the positive electrode and the tab 130 of the negative electrode sheet 100), and the ion transfer rate is fast. It is necessary to set more negative electrode materials with good kinetic performance in the regions on both sides, so as to increase the ion diffusion rate, reduce the ion transfer impedance, and reduce the risk of lithium plating. More high specific energy active materials can be configured at low-potential regions to increase the energy density of the battery cell. Therefore, the battery cell as a whole can achieve a balance between high specific energy and fast charging capability.

It should be further noted that, in order to meet the above requirements, the second active material layer 170 is made of a negative electrode material with good kinetics, such as a negative electrode material with a high degree of graphitization, a large specific area, and low polarization. The first active material layer 150 is a high specific energy negative electrode material, such as a negative electrode material with a broad particle size distribution.

Referring to Fig. 2, in this embodiment, the particle size distribution of the first active material layer 150 is broader than that of the second active material layer 170, therefore, the first active material layer 150 with better kinetics and the second active material layer 170 with high specific energy are obtained.

Specifically, the main material of the first active material layer 150 is a mixture of small graphite particles. The main material of the second active material layer is a mixture of large and small graphite particles.

For example, the second active material layer 170 is prepared by mixing large graphite particles and small graphite particles, a binder, a conductive agent, and a first solvent in a certain proportion to prepare a slurry for the second active material layer 170. The first active material layer 150 is prepared by mixing small graphite particles, a binder, a conductive agent, and a second solvent in a certain proportion to prepare a slurry for the first active material layer 150. Therefore, the second active material layer 170 with better kinetics and the first active material layer 150 with high specific energy are obtained.

As a negative electrode material for lithium-ion batteries, graphite exists in two forms inside the battery 300: one is small-particle graphite with a particle size typically less than 10 µm, and the other is large-particle graphite with a particle size typically greater than 10 µm. Due to its small particle size and large surface area, the small-particle graphite facilitates contact between the electrode material and the electrolyte of the battery 300, and improves the discharge rate of the battery 300. In addition, the small-particle graphite has good lithium intercalation performance and can effectively accommodate lithium ions, thereby improving the capacity of the battery 300. Large-particle graphite can well maintain the structural stability of the battery 300 due to its large particles, and increase the cycle life of the battery 300. In addition, large-particle graphite has a high conductivity, and can improve the discharge efficiency of the battery.

Of course, the first active material layer 150 and the second active material layer 170 can also be prepared using other main materials and auxiliary materials, as long as the main materials and auxiliary materials meet the good kinetics of the first active material layer 150 and the high specific energy of the second active material layer 170.

The sum of the thickness of the first active material layer 150 and the thickness of the second active material layer 170 is equal at any location on the current collector 110. That is, the formed outer surface is a plane, thereby maintaining a constant distance between the positive electrode sheet and the negative electrode sheet 100.

Referring to Fig. 2, in this embodiment, the ratio of the thickness of the first active material layer 150 to the thickness of the second active material layer 170 is X. The value of X varies in the extension direction of the tab 130. The value range of X is 0<X≤10. The ratio of the thickness of the first active material layer 150 to the thickness of the second active material layer 170 gradually increases from one side of the tab 130 towards the side away from the tab 130, and then gradually decreases, so as to better alleviate the problem of lithium plating.

For example, the value of X can vary between 0.5 and 2, first gradually increasing from 0.5 to 2, and then gradually decreasing from 2 to 0.5. The value range of X can also be 1-2, 2-3, 4-6, 1-10, 1-5, 2-8, 1-6, 2-7, 3-9, etc., or 0.5-1, 0.1-1, etc. The specific range can be determined according to parameters such as the size of the battery.

It can be seen from Fig. 2 that the bonding surface of the first active material layer 150 and the second active material layer 170 is substantially a parabola with a downward opening.

In this embodiment, the surface density of the first active material layer 150 is different from that of the second active material layer 170.

It should be noted that the surface density ratio of the first active material layer 150 to the second active material layer 170 can be adjusted according to the performance requirements of the battery cell. If the battery 300 has high requirements for fast charging performance, the surface density ratio of the second active material layer 170 can be increased, and if the battery has high requirements for energy density, the surface density of the first active material layer 150 can be increased.

In this embodiment, the first active material layer 150 and the second active material layer 170 are asymmetric structures. That is, the thickest portion of the first active material layer 150 is not located at the central location corresponding to the extension direction of the tab 130 of the negative electrode sheet 100. The specific location of maximum thickness of the first active material layer 150, including its symmetry, is determined based on the material characteristics and electrical conductivity differences of the current collector 110.

In this embodiment, the current collector 110 is integrally formed with the tab 130. For example, the tab 130 and the current collector 110 are integrally formed through a die-cutting process. The negative electrode sheet 100 is symmetrically arranged with respect to the current collector 110 in the thickness direction of the negative electrode sheet 100. The current collector 110 is made of one of metal foil, composite foil and coated foil, for example, copper foil.

Referring to Fig. 2 and the table below, it can be known from experiments that three points L, P, and Q are respectively selected on the negative electrode sheet 100 from the side of the tab 130 towards the side away from the tab 130, with different thickness ratios set. As shown in Fig. 2 and the table below, in Group A, the ratio increases first and then decreases from the extension direction of the tab side towards the opposite side; in Group B, the thickness ratios of the upper and lower layers are consistent; in Group C, opposite to Group A, the ratio decreases first and then increases from the tab 130 side towards the opposite side along the extension direction. After 1000 cycles, it can be found that Group A has no lithium plating, Group B has slight lithium plating, and Group C has severe lithium plating.

**Table 1: Test results of lithium plating status at points L, P, and Q under different thickness ratios in comparative experiments of Groups A, B, and C**

| | A | B | C |
|---|---|---|---|
| L | 2/ 8 | 5/ 5 | 8/ 2 |
| P | 7/ 3 | 5/ 5 | 3/ 7 |
| Q | 2/ 8 | 5/ 5 | 2/ 8 |
| 1000 cycles of lithium plating status | No lithium plating | Slight lithium plating | Severe lithium plating |

It can be seen from the above table that the negative electrode sheet 100 provided in this embodiment can alleviate the problem of lithium plating in the battery.

Secondly, this embodiment also provides an electrical device. The electrical device includes an electrical device body and the battery 300 described in the above embodiment arranged in the electrical device body. The battery 300 is configured to supply power to the electrical device body, so as to operate the electrical device body. The electrical device can be an energy storage cabinet, an electric vehicle, an electric tool, etc.

In summary, the embodiments of the present invention provide a negative electrode sheet 100, a battery 300, a battery pack, and an electrical device, and the working principles and beneficial effects include:
In this embodiment, the first active material layer 150 is coated on front and back sides of the current collector 110, and the thickness of the first active material layer gradually increases from a side of the tab 130 towards a side away from the tab 130, and then gradually decreases. The second active material layer 170 is coated on an outer side of the first active material layer 150, and the thickness of the second active material layer 170 gradually decreases from one side of the tab 130 towards the side away from the tab 130, and then gradually increases. In this way, the high-potential region between the positive electrode sheet and the negative electrode sheet 100 can increase the ion diffusion rate, reduce ion transfer impedance, and lower the risk of lithium plating.

The above are only specific embodiments of the present invention, but the protection scope of the present invention is not limited thereto. Any changes or substitutions that can be easily thought of by those skilled in the art within the technical scope disclosed in the present invention should be included in the protection scope of the present invention. Therefore, the protection scope of the present invention should be based on the protection scope of the claims.

### Industrial Applicability

The present invention provides a negative electrode sheet, a battery, a battery pack, and an electrical device. By configuring the active material layer of the negative electrode sheet coated on the surface of the current collector, the lithium plating problem is alleviated, and the safety of the battery is enhanced.

## Claims

1. A negative electrode sheet, comprising:
a current collector(110);
a tab (130) connected to one side of the current collector (110);
a first active material layer (150), wherein the first active material layer (150) is coated on front and back sides of the current collector (110), and a thickness of the first active material layer (150) gradually increases from a side of the tab (130) towards a side away from the tab (130), and then gradually decreases; and
a second active material layer (170), wherein the second active material layer (170) is coated on an outer side of the first active material layer (150), and a thickness of the second active material layer (170) gradually decreases from one side of the tab (130) towards the side away from the tab (130), and then gradually increases.

2. The negative electrode sheet according to claim 1, wherein the first active material layer (150) is a high specific energy active material layer, and a kinetic performance of the second active material layer (170) is greater than that of the first active material layer (150).

3. The negative electrode sheet according to claim 1 or 2, wherein a sum of the thickness of the first active material layer (150) and the thickness of the second active material layer (170) at any location on the current collector (110) is equal.

4. The negative electrode sheet according to any one of claims 1 to 3, wherein a ratio of the thickness of the first active material layer (150) to the thickness of the second active material layer (170) is denoted as X, and a value range of X is 0<X≤10.

5. The negative electrode sheet according to any one of claims 1 to 4, wherein the ratio of the thickness of the first active material layer (150) to the thickness of the second active material layer (170) gradually increases from one side of the tab (130) towards the side away from the tab (130), and then gradually decreases.

6. The negative electrode sheet according to any one of claims 1 to 5, wherein a surface density of the first active material layer (150) is different from that of the second active material layer (170).

7. The negative electrode sheet according to any one of claims 1 to 6, wherein the first active material layer (150) and the second active material layer (170) are asymmetric structures in an extension direction of the tab (130).

8. The negative electrode sheet according to any one of claims 1 to 7, wherein a particle size distribution of the first active material layer (150) is broader than that of the second active material layer (170).

9. The negative electrode sheet according to any one of claims 1 to 8, wherein a main material of the first active material layer (150) is a mixture of small graphite particles;
a main material of the second active material layer (170) is a mixture of large and small graphite particles.

10. The negative electrode sheet according to any one of claims 1 to 9, wherein the current collector (110) and the tab (130) are integrally formed.

11. The negative electrode sheet according to any one of claims 1 to 10, wherein the negative electrode sheet (100) is symmetrically arranged with respect to the current collector (110) in a thickness direction of the negative electrode sheet (100).

12. The negative electrode sheet according to any one of claims 1 to 11, wherein the current collector (110) is made of one of metal foil, composite foil and coated foil.

13. A battery, comprising a housing (310), a bare cell and a terminal (330), wherein
the bare cell comprises a positive electrode sheet, a separator and the negative electrode sheet as described in any one of claims 1 to 10;
the positive electrode sheet, the separator, the negative electrode sheet and the separator are stacked in sequence;
the bare cell is installed in the housing (310), and the tab (130) is electrically connected to the terminal (330).

14. A battery pack, comprising a plurality of batteries according to claim 13, wherein the plurality of batteries are connected in parallel or in series.

15. An electrical device, comprising an electrical device body and the battery according to claim 13, wherein the battery is arranged in the electrical device body to supply power to the electrical device body.
